# EUROPEAN PATENT SPECIFICATION

(11) **EP 2 075 500 B1**
(45) Date of publication and mention of the grant of the patent: **24.08.2016**
(21) Application number: 08021931.4
(22) Date of filing: 17.12.2008
(51) Int. Cl.: F21S 8/12, F21V 7/00, B60Q 1/00, F21S 8/10, F21W 101/10

(54) **Vehicle headlamp**
Fahrzeugscheinwerfer
Phare de véhicule

(30) Priority: 27.12.2007 JP 2007337581
(43) Date of publication of application: 01.07.2009
(73) Proprietor: Koito Manufacturing Co., Ltd., Tokyo 108-8711 (JP)
(72) Inventor: Naganawa, Masahito, Shizuoka-shi Shizuoka (JP); Tsukamoto, Michio, Shizuoka-shi Shizuoka (JP)
(74) Representative: Grünecker Patent- und Rechtsanwälte PartG mbB

(56) References cited:
- EP-A1- 1 892 461
- EP-A1- 1 947 380
- EP-A2- 1 420 204
- DE-A1- 10 037 196
- DE-A1-102005 020 866
- DE-B- 1 278 973
- DE-T2- 60 301 921
- FR-A- 1 450 118
- GB-A- 2 337 810
- US-A- 2 281 643
- US-A- 4 225 903
- US-A- 4 903 173

## Description

Apparatuses and devices consistent with the present invention relate to a vehicle headlamp which can form a light distribution pattern for daytime running.

Such a vehicle headlamp is, for example, already known from Document US-4225903. This document relates to high and low beams, but not to daytime running lights. This document shows one lamp including two filaments one for low-beam and one for high beam. With a turned on low beam light the filament emits the light onto two partial paraboloids.

Document US-4903173 shows a vehicle headlamp having a main reflector and an auxiliary reflector. A light source is provided as a main light source and an auxiliary light source as a clearance lamp which, for example, is a fog lamp. The clearance lamp is provided in the side portion of the main reflector mirror.

Document US-2281643 relates to a reflector having a lamp and a parking lamp, however, this document also does not show a daytime lamp. This document shows one reflector.

In recent years, a vehicle lamp called a daytime running lamp has been developed. Daytime running lamps are turned on during the daytime to make oncoming drivers and pedestrians recognize the existence of the vehicle by outwardly irradiating light from a light source. This type of vehicle lamp is, for example, embedded in a front bumper of an automobile. Like the other types of indicating lamps such as a clearance lamp, the daytime running lamp includes a light emitting diode (LED) which is provided as a light source and a reflector which is arranged behind the LED to forwardly reflect light emitted from the LED, and the LED and the reflector are accommodated inside a lamp chamber defined by a lamp body and a front cover.

JP2006-164909A, for example, describes a multifunctional daytime running lamp which has a good external appearance even when the lamp is not lit. This daytime running lamp has a first LED and a second LED inside a lamp chamber defined by a lamp body and a front cover. Light from the first LED is reflected by a reflector area to form a first light distribution pattern having a high intensity, while light from the second LED is surface-emitted from the entire light guiding area to form a second light distribution pattern Thus, by combining these light distribution patterns, unique light distribution patterns may be created.

This daytime running lamp is mounted in an opening formed in a front wall of a front bumper from a front side of the bumper such that the front cover of the lamp becomes substantially flush with the front wall of the bumper.

However, because the daytime running lamp is embedded in the front bumper and is separately provided at a position spaced apart from a headlamp, a mounting space for the daytime running lamp is required in addition to a mounting space for the headlamp. This has been disadvantageous not only in that the total space required is large, but also in that a mounting member, a mounting design and a mounting work for the daytime running lamp is necessary in addition to those for the headlamp, resulting in increase of manufacturing cost.

Accordingly, it is an object of the present invention to provide a low-cost vehicle headlamp which can form a headlamp light distribution pattern and a daytime running lamp light distribution pattern while reducing a mounting space on a vehicle.

This object is met by the features of claim 1.

Other aspects and advantages of the invention will be apparent from the following description, the drawings and the claims.
Fig. 1 is a front view of a vehicle headlamp according to a first embodiment of the invention;
Fig. 2 is a sectional view taken along the line II-II in Fig. 1;
Fig. 3 is a perspective view of light distribution patterns formed by light irradiated from the vehicle headlamp of Fig. 1 on an imaginary vertical screen disposed in front of the vehicle headlamp; and
Fig. 4 is a sectional view of a vehicle headlamp according to second embodiment of the invention.

Hereinafter, embodiments of the present invention will be described in detail with reference to the drawings.

### FIRST EMBODIMENT

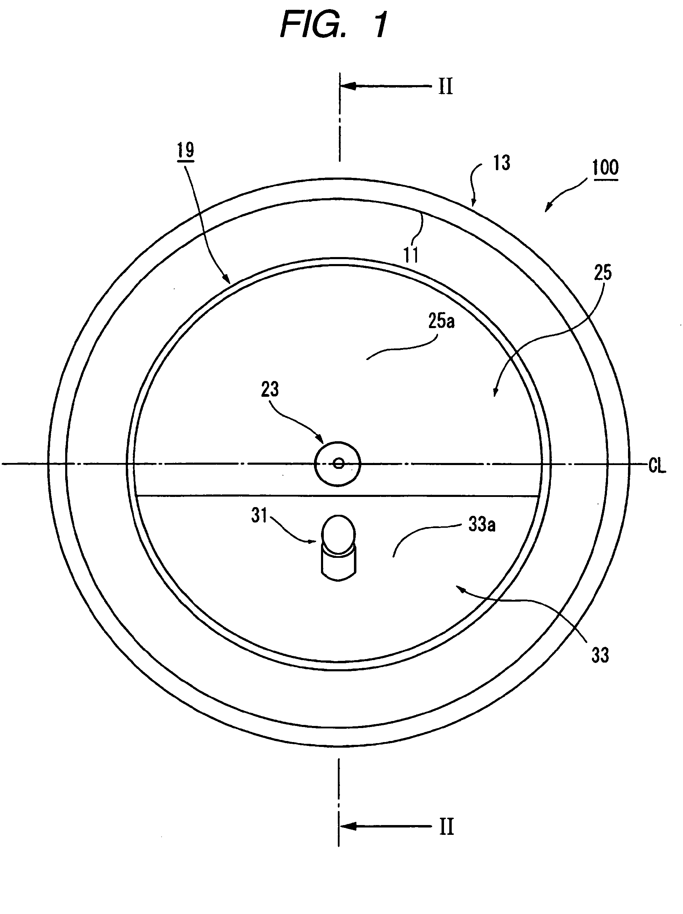

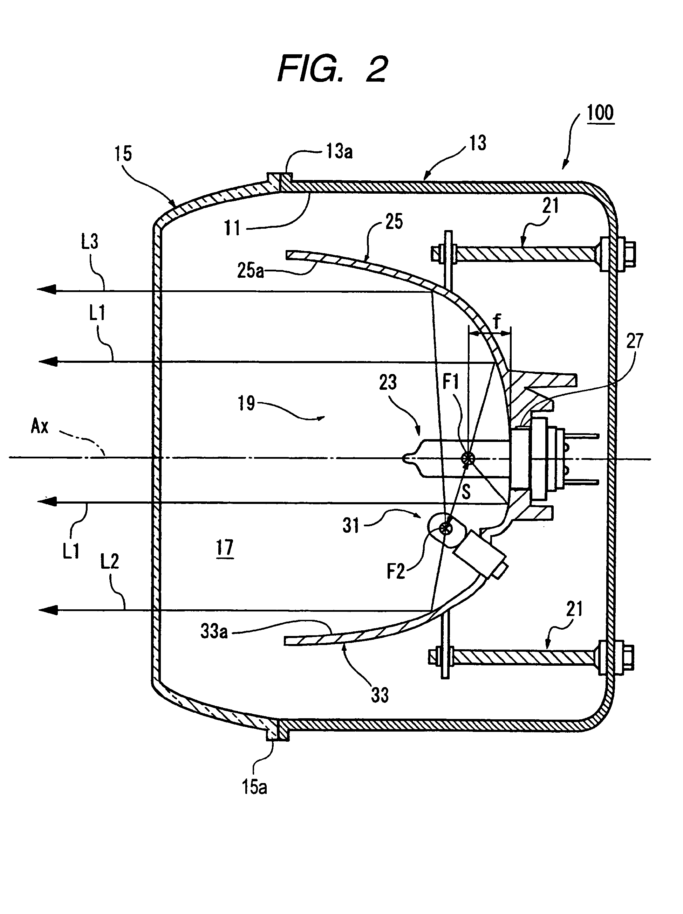

As is shown in Figs. 1 and 2, a vehicle headlamp 100 according to a first embodiment includes a lamp body 13 having a front opening 11 and a transparent front cover 15 which is attached to the lamp body 13 to cover the front opening 11. The front cover 15 is attached to the lamp body 13 by fitting an edge 15a of the front cover 15 to an edge 13a around the front opening 11. A lamp unit 9 is disposed inside a lamp chamber 17 defined by the lamp body 13 and the front cover 15. It is noted that the vehicle headlamp 100 is shown and described as having a circular shape. However, any shape is possible as long as the vehicle headlamp 100 may be accommodated in a vehicle.

The lamp unit 19 is a headlamp unit configured to form a driving beam light distribution pattern. As is shown in Fig. 2, the angle of the lamp unit 19 is adjustable by an aiming mechanism 21 to adjust an optical axis Ax of light to be irradiated therefrom. The optical axis Ax of the lamp unit 19 is adjusted to extend substantially along a front-and-rear direction of a vehicle.

The lamp unit 19 includes a headlamp light source 23 and a headlamp reflector 25. While the headlamp light source 23 is a halogen bulb in this embodiment, a discharge bulb or a semiconductor light emitting device, such as an LED, may also be used as the headlamp light source 23.

The lamp unit 19 is a parabolic-type lamp unit. That is, the headlamp reflector 25 has a base reflecting surface 25a which is formed as a paraboloidal surface having the optical axis Ax as a center axis of the paraboloidal surface, and the headlamp light source 23 is disposed at or near a focal point F1 of the paraboloidal surface. The base reflecting surface 25a reflects light L1 from the headlamp light source 23 toward the front of the vehicle in substantially parallel rays to form the driving beam light distribution pattern.

An attaching opening 27 is formed in a bottom portion of the headlamp reflector 25 around the optical axis Ax, and the headlamp light source 23 is fixedly inserted in the attaching opening 27.

A daytime running lamp light source 31 is disposed near the headlamp light source 23. While the daytime running lamp light source 31 is a bulb (P21W) of 12V, 21W in this embodiment, a filament bulb or a semiconductor light emitting element may also be used as the daytime running lamp light source 31.

A daytime running lamp reflector 33 is provided on a portion of the headlamp reflector 25 near the daytime running lamp light source 31.

The daytime running lamp reflector 33 is positioned below a horizontal center line CL of the headlamp reflector 25, and forms a one-piece structure together with the headlamp reflector 25. The daytime running lamp reflector 33 has a base reflecting surface 33a which is a paraboloidal surface having a focal point F2 positioned at or near the daytime running lamp light source 31. The base reflecting surface 33a of the daytime running lamp reflector 33 reflects light L2 from the daytime running lamp light source 31 to form a portion of a daytime running light distribution pattern.

The daytime running lamp light source 31 is fixed to the daytime running lamp reflector 33, and the daytime running lamp reflector 33 and the headlamp reflector 25 are formed in a one-piece structure. Therefore, the daytime running lamp light source 31 can be fixed with respect to the lamp body 13 via the headlamp reflector 25. Accordingly, a special fixing member for the daytime running lamp light source 31 is not used so that it possible to downsize the entire headlamp. In addition, the driving beam light distribution pattern and the daytime running light distribution pattern can be adjusted at the same time with the aiming mechanism 21.

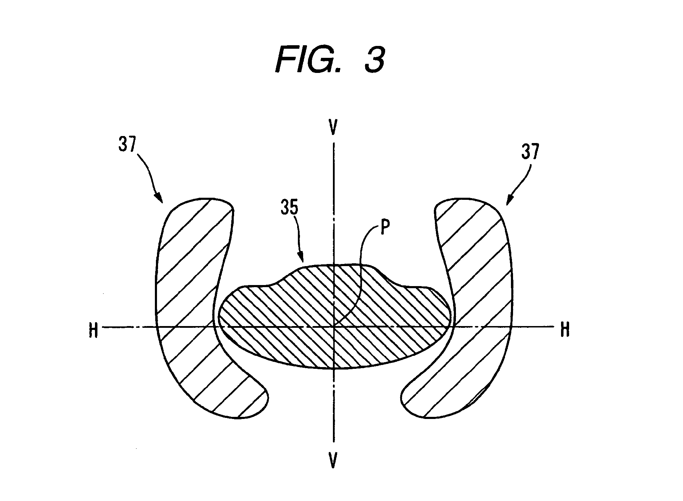

As shown in Fig. 3, the light L2 emitted from the daytime running lamp light source 31 and reflected by the daytime running lamp reflector 33 forms a substantially elliptic first light distribution pattern 35 around an intersecting point P of horizontal and vertical axes on the light distribution coordinate plane. In addition, light L3 emitted from the daytime running lamp light source 31 and reflected by the headlamp reflector 25 forms a pair of second light distribution patterns 37. The second light distribution patterns 37 are on right and left sides of the first light distribution pattern 35.

The first light distribution pattern 35 has a luminous intensity of about 330 cad and the second light distribution patterns 37 have a luminous intensity of about 160 cad. Thus, by combining the first light distribution pattern 35 and the second light distribution patterns 37, a total luminous intensity of about 490 cad can be obtained.

The daytime running lamp light source 31 is disposed within a range S where a distance from the headlamp light source 23 is equal to or less than approximately 1.5 times a focal length f of the headlamp reflector 25.

If the daytime running lamp light source 31 is disposed too far away from the headlamp light source 23, a proportion of the light that is emitted from the daytime running lamp light source 31 but not utilized for the daytime running light distribution pattern increases. If the daytime running lamp light source 31 is disposed within the range S where the distance from the headlamp light source 23 is equal to or less than approximately 1.5 times the focal length f of the headlamp reflector 25, the light from the daytime running lamp light source 31 can be effectively reflected by the headlamp reflector 25 to form the second light distribution patterns 37.

Further, because the daytime running lamp light source 31 is disposed below the headlamp light source 23, the daytime running lamp light source 31 is less affected by heat generated from the headlamp light source 23.

The headlamp light source 23 is disposed on the optical axis Ax of the headlamp reflector 25 so that an efficient driving beam light distribution pattern is formed.

On the other hand, because the daytime running lamp light source 31 is disposed in a position away from the optical axis Ax of the headlamp reflector 25, the light L3 reflected by the headlamp reflector 25 is outwardly diffused in the right and left directions to form the second light distribution patterns 37 as shown in Fig. 3. The light L2 from the daytime running lamp light source 31 is reflected by the daytime running lamp reflector 33 to form the first light distribution pattern 35, which is the central portion of the daytime running light distribution pattern. The second light distribution patterns 37 are not formed in the central portion.

As described above, the light L3 from the daytime running lamp light source 31 is reflected by the headlamp reflector 25 to complement a portion of the daytime running light distribution pattern. That is, by making use of the headlamp reflector 25, it is possible to achieve a size of a base reflecting surface of a daytime running lamp in a range of about 25 cm² to about 200 cm² without increasing the overall size of the vehicle headlamp 100. Namely, because the headlamp reflector 25 is effectively used to form the daytime running light distribution pattern, the daytime running lamp reflector 33 can be downsized whereby the entire vehicle headlamp 100 can also be downsized and manufacturing cost thereof is reduced.

Consequently, the vehicle headlamp 100 can form both the headlamp light distribution pattern and the daytime running light distribution pattern with lower cost while reducing a mounting space on the vehicle.

### SECOND EMBODIMENT

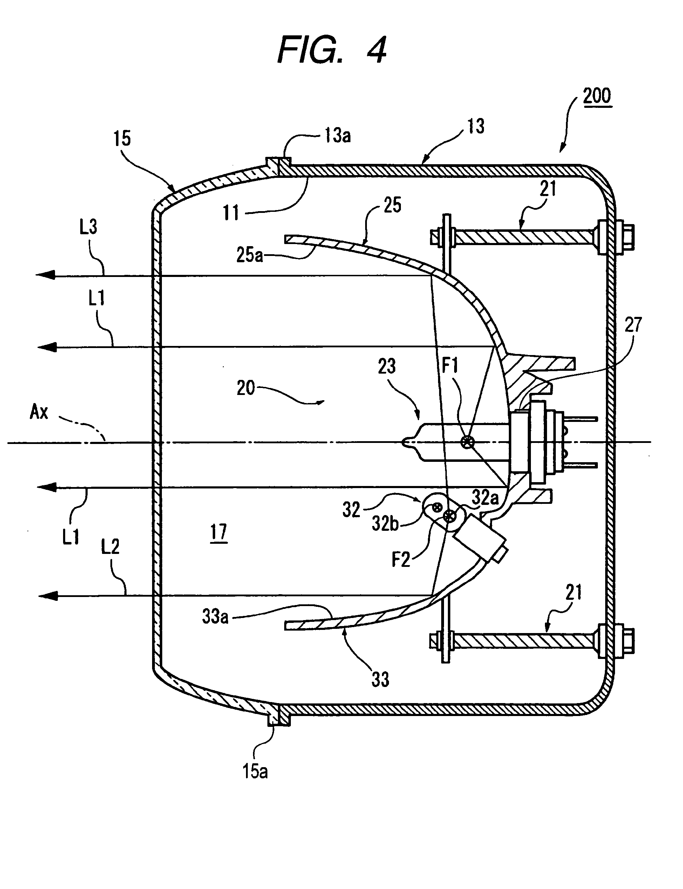

Fig. 4 is a sectional view of a vehicle headlamp 200 according a second embodiment of the present invention. Components of the vehicle headlamp 200 are similar to those of the vehicle headlamp 100 of the first embodiment except for a lamp unit 20. Therefore, the similar components will be indicated by the same reference numerals, detailed description thereof will be omitted.

As shown in Fig. 4, the lamp unit 20 of the vehicle headlamp 200 is disposed inside a lamp chamber 17 defined by a lamp body 13 and a front cover 15. Like the lamp unit 19 of the first embodiment, the lamp unit 20 of the second embodiment is a headlamp unit configured to form a driving beam light distribution pattern, and is supported by an aiming mechanism 21 such that an optical axis Ax thereof is adjustable.

In the lamp unit 20, a daytime running lamp light source 32 is disposed near a headlamp light source 23. The daytime running lamp light source 32 is a double filament bulb, e.g., a bulb of 12V, 21/5W (S bulb, T bulb), and has a first filament 32a and a second filament 32b.

The first filament 32a is disposed to coincide with a focal point F2 of a base reflecting surface 33a of a daytime running lamp reflector 33, whereby a portion of a daytime running light distribution pattern can be formed by light from the first filament 32a.

The second filament 32b is disposed to be offset from the focal point F2, whereby a clearance lamp light distribution pattern can be formed by light from the second filament 32b.

When using the lamp unit 20 as the daytime running lamp, the double filament bulb (the daytime running lamp light source 32) is used as a bulb of 12V, 21W, and when using the lamp unit 20 as a clearance lamp, the double filament bulb (the daytime running lamp light source 32) is used as a bulb of 12V, 5W. Accordingly, the single lamp unit 20 can have three functions of headlamp, daytime running lamp and clearance lamp.

While description has been made in connection with embodiments of the present invention, those skilled in the art will understand that various changes and modification may be made therein without departing from the present invention.

For example, while the lamp units 19, 20 of the embodiments described above are configured to form a driving beam light distribution pattern (also called an upper beam light distribution pattern) as a headlamp light distribution pattern, the lamp units 19, 20 may alternatively be configured to form a passing beam light distribution pattern (also called a lower beam light distribution pattern). Further, the headlamp light source 23 and the daytime running lamp light sources 31, 51 may be selected from various kinds of light sources including a discharge bulb, a halogen bulb and a semiconductor light emitting device such as an LED.

Furthermore, while the daytime running lamp reflector 33 and the headlamp reflector 25 are formed in a one-piece structure in the embodiments described above, the daytime running lamp reflector 33 and the headlamp reflector 25 may be provided as separate components.

## Claims

1. A vehicle headlamp (100, 200) comprising:
a headlamp light source (23) disposed on an optical axis (Ax) extending in a front-and-rear direction of a vehicle;
a headlamp reflector (25) which forwardly reflects light (L1) from the headlamp light source (23) to form a driving beam light distribution pattern,
wherein an attaching opening (27) is formed in a bottom portion of the headlamp reflector (25) around an optical axis (AX) and the headlamp light source (23) is fixedly inserted in the attaching opening (27),
**characterized by**
a daytime running lamp light source (31, 32) disposed near the headlamp light source (23); and
a daytime running lamp reflector (33) disposed near the daytime running lamp light source (31, 32),
wherein a daytime running light distribution pattern (35, 37) is formed by light (L2, L3) emitted from the daytime running lamp light source (31, 32), wherein a portion (L2) of the light (L2, L3) emitted from the daytime running lamp light source (31, 32) is reflected by the daytime running lamp reflector (33) and another portion (L3) of the light (L2, L3) emitted from the daytime running lamp light source (31, 32) is reflected by the headlamp reflector (25),
wherein the daytime running lamp reflector (33) is disposed below the headlamp reflector (25) to form a one-piece structure together with the headlamp reflector (25), and
the daytime running lamp light source (31, 32) is fixed to the daytime running lamp reflector (33),
and wherein a distance between the daytime running lamp light source (31, 32) and the headlamp light source (23) is equal to or less than 1.5 times a focal length (f) of the headlamp reflector (25), and wherein the daytime running lamp light source (31) is disposed below the headlamp light source 23.

2. The vehicle headlamp (100, 200) according any one of the preceding claims, further comprising an aiming mechanism (21) with which orientations of the headlamp light source (23), the headlamp reflector (25), the daytime running lamp light source (31, 32), and the daytime running lamp reflector (33) are simultaneously adjustable.

3. The vehicle headlamp (100, 200) according to any one of the preceding claims, further comprising: a lamp body (13) comprising a front opening (11); and
a front cover (15) attached to the lamp body to (13) cover the front opening (11),wherein the headlamp light source (23), the headlamp reflector (25), the daytime running lamp light source (31, 32), and the daytime running lamp reflector (33) are accommodated inside a lamp chamber (17) defined by the lamp body (13) and the lamp cover (15).

4. The vehicle headlamp (100, 200) according to any one of the preceding claims, wherein the headlamp light source (23) disposed at a focal point (F1) of the headlamp reflector (25).

5. The vehicle headlamp (200) according to any one of the preceding claims, wherein the daytime running lamp light source (32) comprises a double filament bulb.

6. A vehicle headlamp according to claim 1, wherein the portion (L2) of the light (L2, L emitted from the daytime running lamp light source (31, 32) and reflected by the daytime running lamp reflector (33) forms a first light distribution pattern (35) around an intersecting point (P) of horizontal and vertical axes (H, V) on a plane in front of the vehicle, and
the another portion (L3) of the light (L2, L3) emitted from the daytime running lamp light source (31, 32) and reflected by the headlamp reflector (25) forms a second light distribution pattern (37) on a portion of the plane that is outside the first light distribution pattern (35).

## Patentansprüche

1. Fahrzeugscheinwerfer (100, 200), der umfasst:
eine Scheinwerfer-Lichtquelle (23), die auf einer optischen Achse (1) angeordnet ist, die in einer Längsrichtung eines Fahrzeugs verläuft;
einen Scheinwerfer-Reflektor (25), der Licht (L1) von der Scheinwerfer-Lichtquelle (23) nach vorn reflektiert, um ein Fernlicht-Lichtverteilungsmuster zu erzeugen,
wobei eine Anbringungsöffnung (27) in einem unteren Abschnitt des Scheinwerfer-Reflektors (25) um eine optische Achse (AX) herum ausgebildet ist und die Scheinwerfer-Lichtquelle (23) fest in die Anbringungsöffnung (27) eingeführt ist,
**gekennzeichnet durch**
eine Tagfahrleuchten-Lichtquelle (31, 32), die in der Nähe der Scheinwerfer-Lichtquelle (23) angeordnet ist; und
einen Tagfahrleuchten-Reflektor (33), der in der Nähe der Tagfahrleuchten-Lichtquelle (31, 32) angeordnet ist,
wobei ein Tagfahr-Lichtverteilungsmuster (35, 37) **durch** von der Tagfahrleuchten-Lichtquelle (31, 32) emittiertes Licht (L2, L3) ausgebildet wird und ein Teil (L2) des von der Tagfahrleuchten-Lichtquelle (31, 32) emittierten Lichtes (L2, L3) **durch** den Tagfahrleuchten-Reflektor (33) reflektiert wird und ein anderer Teil (L3) des von der Tagfahrleuchten-Lichtquelle (31, 32) emittierten Lichtes (L2, L3) **durch** den Scheinwerfer-Reflektor (25) reflektiert wird,
wobei der Tagfahrleuchten-Reflektor (33) so unter dem Scheinwerfer-Reflektor (25) angeordnet ist, dass er zusammen mit dem Scheinwerfer-Reflektor (25) eine aus einem Stück bestehende Struktur bildet, und
die Tagfahrleuchten-Lichtquelle (31, 32) an dem Tagfahrleuchten-Reflektor (33) befestigt ist,
und ein Abstand zwischen der Tagfahrleuchten-Lichtquelle (31, 32) und der Scheinwerfer-Lichtquelle (23) genauso groß ist wie oder kleiner als das 1,5-fache einer Brennweite (f) des Scheinwerfer-Reflektors (25) und die Tagfahrleuchten-Lichtquelle (31) unterhalb der Scheinwerfer-Lichtquelle (23) angeordnet ist.

2. Fahrzeugscheinwerfer (100, 200) nach einem der vorangehenden Ansprüche, der des Weiteren einen Einstellmechanismus (21) umfasst, mit dem Ausrichtungen der Scheinwerfer-Lichtquelle (23), des Scheinwerfer-Reflektors (25), der Tagfahrleuchten-Lichtquelle (31, 32) und des Tagfahrleuchten-Reflektors (33) gleichzeitig eingestellt werden können.

3. Fahrzeugscheinwerfer (100, 200) nach einem der vorangehenden Ansprüche, der des Weiteren umfasst:
ein Leuchtengehäuse (13), das eine vordere Öffnung (11) umfasst; und
eine vordere Abdeckung (15), die an dem Leuchtengehäuse (13) angebracht ist und die vordere Öffnung (11) abdeckt, wobei die Scheinwerfer-Lichtquelle (23), der Scheinwerfer-Reflektor (25), die Tagfahrleuchten-Lichtquelle (31, 32) und derTagfahrleuchten-Reflektor (33) im Inneren einer Leuchtenkammer (17) aufgenommen sind, die durch das Leuchtengehäuse (13) und die Leuchtenabdeckung (15) gebildet wird.

4. Fahrzeugscheinwerfer (100) nach einem der vorangehenden Ansprüche, wobei die Scheinwerfer-Lichtquelle (23) an einem Brennpunkt (F1) des Scheinwerferreflektors (25) angeordnet ist.

5. Fahrzeugscheinwerfer (200) nach einem der vorangehenden Ansprüche, wobei die Tagfahrleuchten-Lichtquelle (32) eine Doppelfadenlampe umfasst.

6. Fahrzeugscheinwerfer nach Anspruch 1, wobei der Teil (L2) des Lichtes (L2, L3), der von der Tagfahrleuchten-Lichtquelle (31, 32) emittiert und durch den Tagfahrleuchten-Reflektor (33) reflektiert wird, ein erstes Lichtverteilungsmuster (35) um einen Schnittpunkt (P) einer horizontalen und einer vertikalen Achse (H, V) auf einer Ebene vor dem Fahrzeug erzeugt, und
der andere Teil (L3) des Lichtes (L2, L3), der von der Tagfahrleuchten-Lichtquelle (31, 32) emittiert und durch den Scheinwerfer-Reflektor (25) reflektiert wird, ein zweites Lichtverteilungsmuster (37) auf einem Teil der Ebene erzeugt, der außerhalb des ersten Lichtverteilungsmusters (35) liegt.

## Revendications

1. Phare de véhicule (100, 200) comprenant :
une source de lumière de phare (23) disposée sur un axe optique (Ax) s'étendant dans la direction avant-arrière d'un véhicule ;
un réflecteur de phare (25) qui réfléchit vers l'avant la lumière (L1) provenant de la source de lumière de phare (23) pour former un motif de répartition de lumière de feu de conduite,
dans lequel une ouverture de fixation (27) est formée dans la partie inférieure du réflecteur de phare (25) autour de l'axe optique (AX) et la source de lumière de phare (23) est insérée de manière fixe dans l'ouverture de fixation (27),
**caractérisé par**
une source de lumière de feu de circulation de jour (31, 32) disposée près de la source de lumière de phare (23) ; et
un réflecteur de feu de circulation de jour (33) disposé près de la source de lumière de feu de circulation de jour (31, 32),
dans lequel un motif de répartition de lumière de feu de circulation de jour (35, 37) est formé par la lumière (L2, L3) émise par la source de lumière de feu de circulation de jour (31, 32), dans lequel une partie (L2) de la lumière (L2, L3) émise par la source de lumière de feu de circulation de jour (31, 32) est réfléchie par le réflecteur de feu de circulation de jour (33) et une autre partie (L3) de la lumière (L2, L3) émise par la source de lumière de feu de circulation de jour (31, 32) est réfléchie par le réflecteur de phare (25),
dans lequel le réflecteur de feu de circulation de jour (33) est disposé en dessous du réflecteur de phare (25), formant une structure en une seule pièce avec le réflecteur de phare (25), et
la source de lumière de feu de circulation de jour (31, 32) est fixée au réflecteur de feu de circulation de jour (33),
et dans lequel la distance entre la source de lumière de feu de circulation de jour (31, 32) et la source de lumière de phare (23) est inférieure ou égale à 1,5 fois la distance focale (f) du réflecteur de phare (25) et dans lequel la source de lumière de feu de circulation de jour (31) est disposée en dessous de la source de lumière de phare (23).

2. Phare de véhicule (100, 200) selon l'une quelconque des revendications précédentes, comprenant en outre un mécanisme de visée (21) avec lequel les orientations de la source de lumière de phare (23), du réflecteur de phare (25), de la source de lumière de feu de circulation de jour (31, 32) et du réflecteur de feu de circulation de jour (33) sont réglables simultanément.

3. Phare de véhicule (100, 200) selon l'une quelconque des revendications précédentes, comprenant en outre : un corps de lampe (13) comprenant une ouverture avant (11) ; et
un couvercle avant (15) fixée au corps de lampe (13) pour recouvrir l'ouverture avant (11), dans lequel la source de lumière de phare (23), le réflecteur de phare (25), la source de lumière de feu de circulation de jour (31, 32) et le réflecteur de feu de circulation de jour (33) sont reçus à l'intérieur d'une chambre de lampe (17) définie par le corps de lampe (13) et le couvercle de lampe (15).

4. Phare de véhicule (100, 200) selon l'une quelconque des revendications précédentes, dans lequel la source de lumière de phare (23) est disposée au foyer (F1) du réflecteur de phare (25).

5. Phare de véhicule (200) selon l'une quelconque des revendications précédentes, dans lequel la source de lumière de feu de circulation de jour (32) comprend une ampoule à double filament.

6. Phare de véhicule selon la revendication 1, dans lequel la partie (L2) de la lumière (L2, L3) émise par la source de lumière de feu de circulation de jour (31, 32) et réfléchie par le réflecteur de feu de circulation de jour (33) forme un premier motif de répartition de lumière (35) autour du point d'intersection (P) d'axes horizontal et vertical (H, V) sur un plan devant le véhicule, et
l'autre partie (L3) de la lumière (L2, L3) émise par la source de lumière de feu de circulation de jour (31, 32) et réfléchie par le réflecteur de phare (25) forme un second motif de répartition de lumière (37) sur une partie du plan qui est extérieure au premier motif de répartition de lumière (35).
